# EUROPEAN PATENT SPECIFICATION

(11) **EP 4 563 969 B1**
(45) Date of publication and mention of the grant of the patent: **15.04.2026**
(21) Application number: 24306913.5
(22) Date of filing: 15.11.2024
(51) Int. Cl.: G01N 1/28, G01N 1/06

(54) **CABLE PEELING METHOD AND DEVICE FOR PEELING A CABLE SPECIMEN**
KABELSCHÄLVERFAHREN UND VORRICHTUNG ZUM SCHÄLEN EINES KABELSTRANGS
PROCÉDÉ ET DISPOSITIF DE DÉNUDAGE DE CÂBLE DESTINÉS À LA DÉCOUPE D'UN SPÉCIMEN DE CÂBLE

(30) Priority: 29.11.2023 NO 20231296; 02.02.2024 NO 20240095
(43) Date of publication of application: 04.06.2025
(73) Proprietor: Nexans, 92400 Courbevoie (FR)
(72) Inventor: DOEDENS, Espen, 92400 COURBEVOIE (FR); JARVID, Erik Markus, 92400 COURBEVOIE (FR)
(74) Representative: Acapo Onsagers AS

(56) References cited:
- CN-A- 104 359 708
- CN-A- 107 947 033
- CN-A- 108 760 378

## Description

### FIELD OF THE INVENTION

The present invention relates to a method of peeling a cable specimen, which method comprises the steps of fixing a knife, comprising a cutting edge, to a roller to receive a knife fixing roller, setting the distance between the rotation axis of the roller and the cutting edge of the knife to a fixed distance, holding the cable specimen, positioning the knife fixing roller onto the cable specimen such that the roller and the cutting edge are in contact with the cable specimen, rotating of the cable specimen, while the knife fixing roller moves in the direction of the center of the cable specimen. The present invention further relates to a device for peeling a cable specimen. Even further, the invention relates to a use of the device.

### BACKGROUND

High-voltage electric power transmission systems have become of increased significance in the energy transition as these systems enable long distance energy connections which could help to deal with the fluctuations of wind power and photovoltaics.

High voltage cables typically comprise a central electrical conductor, mostly aluminum or copper, and successively and coaxially around this electrical conductor, a semiconductive inner layer, an electrically insulating intermediate layer, a semiconducting outer layer. These layers are based on polymer(s), which can be crosslinked or not.

A key factor for high voltage cables concerns the insulating material surrounding the metal conductor in the center of the cable. Considerable research and development efforts have been spent to improve the insulating material. In the course of these efforts it requires to analyze samples of the insulating material. The aim is to investigate cable health which may vary with the radial, longitudinal and angular location in the cable insulation. For example, electrical measurements on the full cable sample require long segments of cable and are thus costly and may not resolve the spatial variations. The preparation of samples of distinguishing spatial positions within the insulating material of the cable is time consuming and elaborate.

In one approach a re-melting of segments of cable insulation into plates have been performed. However, firstly the method can only be performed with non-XLPE insulating materials as the cross-linked insulating materials cannot be remelted, secondly the melting affects morphological insulation properties. Typically, such methods are performed with virgin pellet materials. However, the method allows no approach in investigating cable health. Cutting peelings and thin parts from the full samples is thus preferred, as it only requires short cable segments and provides spatial resolution. The main alternatives to peelings are e.g. slicing or CNC milling which however results in much thicker specimens. Samples can further be obtained by microtomy, where one receives very small samples, which are not distributed around the cable. CN07947033, CN108760378, and CN104359708 disclose devices for peeling cable specimens.

There is a need for methods which enable to receive a high number of samples or alternatively a long peeling sample. Further, there is a need of improving the characteristics of the samples in terms of unity of thickness and other properties.

Problems solved by the invention relate to the provision of a device and a method addressing and fulfilling the above formulated needs. In particular, a problem solved by the invention relates to the provision of a method which enables the production of full cable sample. The sample should have a unified thickness. Also, a problem solved by the invention relates to the provision of a device enabled to perform the method.

### SUMMARY OF THE INVENTION

The invention's underlying problems are solved by the subject-matter of claim 1. The present invention relates to a method of peeling a cable specimen, which method comprises
- fixing a knife, comprising a cutting edge, to a roller to receive a knife fixing roller,
- setting the distance between the rotation axis of the roller and the cutting edge of the knife to a fixed distance,
- holding the cable specimen,
- positioning the knife fixing roller onto the cable specimen such that the roller and the cutting edge are in contact with the cable specimen,
- rotating the cable specimen, while the knife fixing roller moves in the direction of the center of the cable specimen, and receiving a peeling sample.

The method comprises a step of fixing a knife to a roller. The term "fixing" is to be understood in its broadest sense. The fixing enables that the distance between the contact point of the knife onto the surface of the cable specimen and contact point of the roller onto the surface of the cable specimen can be kept constant. In other word, when the knife fixing roller is placed on the surface of the cable specimen, the knife - precisely the sharp edge of the blade of the knife - and the roller is in contact with the surface of the cable specimen. The contact points can be kept constant by the fixing. Or in other words, the fixing enables that the relative position of the knife to the roller is fixed, which is a condition that the depth of the cut/thickness of the produced peel is constant. The precise distance between knife and roller is adjusted in the step of setting, i.e. the quantification of the distance is adjusted by the setting. By setting the knife at a fixed distance inwards from one of the wheels, the thickness of the peeling sample obtained from the method is controlled. There is a defined clearance between the knife and the roller to which the knife is fixed. This method is better at extracting samples from the first surface layer of a non-perfectly round cable specimen, as the first layer has homogenous thickness, which state of the art methods do not provide. The method according to the invention can also be scaled up to far larger size (sample width), as the cutting force of the knife is directly transferred to the roller above it. According to the invention, the cable specimen is held and the cable specimen is rotated. In that the knife fixed to the roller and the roller is placed on the cable specimen, while the cable specimen is rotated, the knife cuts the cable specimen and the peeling sample is obtained. In the course of performing the method, the roller with the knife moves towards the center of the cable specimen due to the proceeding peeling. The line of movement relative to the center of the cable specimen could be designated as trajectory.

In one aspect, there is a notional straight line between the contact point of the knife onto the surface of the cable specimen and contact point of the roller onto the surface of the cable specimen and there is the trajectory of the knife moving towards the cable center while rotating the cable specimen, and during the step of rotating the cable specimen, the angle of the notional straight line with respect to the trajectory is kept constant. The contact point could alternatively be designated as contact point on the surface of the cable specimen. The notional straight line connects the two contact point, i.e. the contact point of the roller on the surface of the cable specimen and the contact point of the knife on the surface of the cable specimen. The trajectory is the line which describes the knife when moving towards the center of the cable specimen. The knife moves toward the center of the cable specimen due to the peeling action. If a line of movement of the knife is drawn during the peeling action, this line is the trajectory. The peeling action is performed such that the angle between the notional straight line and the trajectory is kept constant.

In one more preferred aspect, the trajectory represents the angle bisector between a second notional line drawn between the axis of rotation of the cable specimen and the axis of rotation of the roller on the one hand and a third notional line of the contact point of the knife on the surface of the cable specimen and the axis of rotation of the cable specimen on the other hand. In other words, there can be drawn a notional line between the rotation axis of the roller and the rotation axis of the cable specimen. This notional line is designated as the second notional line. There can be drawn a notional line between the contact point of the knife and the rotation axis of the cable specimen, which notional line is designated as third notional line. According to this more preferred aspect, the trajectory is the angle bisector between the second notional line and the third notional line.

The term "roller" in throughout this application is to be understood in its broadest sense. A roller can be a gadget which slides over the surface of the cable specimen.

In one aspect, the step of holding the cable specimen is performed by at least three rollers being arranged in a roller plane, wherein one of the rollers is the roller of the knife fixing roller.

One easy way of holding a cable specimen is performed by three rollers. The cable specimen as a longitudinal, i.e. one dimensional, object can be fixed in place by three rollers. The term "roller" is to be understood in its broadest sense: Every gadget allowing the cable the movement of rotation along its longitudinal axis is to be understood a roller. It might be the case that an item allowing to slide over the surface of the cable specimen is understood as roller.

According to this aspect of the invention, the three rollers and the knife are arranged in one plain wherein the cable specimen is positioned perpendicular to that plain. Since the knife is arranged in that plain, the three rollers move towards the center of the cable specimen while the cutting proceeds.

In one alternative aspect, the step of holding the cable specimen is performed by a chuck, preferably two chucks, of a lathe. The chuck holds the cable specimen at their end(s). It is immediately clear for a skilled person that the chuck(s) rotate together with the rotation of the cable specimen.

In the framework of the present application, the term "lathe" is to be understood in its broadest sense, i.e. it is a device which turns the cable to perform a rotation. The term "chuck(s)" is also understood in its broadest sense, i.e. a part which enables holding the cable.

This alternative is suitable for short cable specimens. The longer the cable specimens are, the more they bend resulting in a non-uniform thickness of the peeling sample.

In the method of peeling, the cable specimen is caused to rotation. The cable is held by three rollers according to one alternative. In one aspect, the cable is caused to rotate in a lathe while being hold by three rollers.

The method refers to a peeling of a cable specimen which can be performed by rotating the cable specimen along its longitudinal axis. The rotation can be performed by a motor being part of a drive unit and causing the rotation.

In one aspect, the method comprises applying a force to the knife fixing roller which force has a force component directed to the center of the cable specimen.

The force component in the direction of the center of the cable impels the knife to move towards the center of the cable specimen and the peeling proceeds.

In one aspect, the force is exerted by a spring, a physical load-based mechanism, a hydraulic load cylinder, a pneumatic load cylinder, or a compressed elastic material.

Principally, the way of how to drive the knife towards the center of the cable specimen is not crucial. The above examples represent alternatives which are easily accessible.

In one aspect, the method further comprises the steps of
- obtaining a cable peeling sample, or
- obtaining a cable peeling sample and spooling the cable peeling sample onto a collector roll. In a preferred aspect, the spooling is performed in that the collector roll exerts a constant pulling force to the cable peeling sample when spooling the cable peeling sample onto the collector roll.

As a result of the method of the invention, a cable peeling sample is obtained. The cable peeling sample has a uniform thickness even if the cable specimen is not perfectly circular in its cross section.

In one aspect, the step of performing rotation of the cable specimen is performed by a drive unit and wherein the step of spooling is performed by force transmission from the drive unit to the collector roll.

According to this aspect, the rotation and the collection is both performed with only one drive unit, i.e. motor. It enables a uniform gathering of the peeling sample on the collector roll.

In one aspect, the step of spooling is performed by force transmission from the drive unit to the collector roll applying a torque limiter coupling.

The torque limiter coupling enables an improved winding of the cable specimen onto the collector roll.

In one aspect, the method further comprises the step of stopping the method before the knife comes into contact with the cable conductor of the cable specimen.

This aspect represents an improvement in terms of automatization.

In one aspect, the method further comprises the steps of
- providing a marking on the cable specimen,
- detecting the marking on the cable peeling sample and thereby allocating a position of the cable peeling sample to the corresponding spatial position in the cable specimen.

The preferred method enables a mapping of every spot on the peeling sample to a spatial position in the cable material. The making can be produced by drilling a hole in the direction of the center of the electric cable. When performing the peeling of the cable, the marking is visible on the obtained peeling sample. When counting the markings in the lengthwise direction of the cable, one may link the position of the peeling sample to the spatial position in the cable. The hole can be drilled or hot stamped on the side so that it becomes a notch on the peeling, or in the middle.

The invention's underlying problems are further solved by the subject-matter of claim 10. The present invention relates to a device for peeling a cable specimen, wherein the device comprises
- a knife, comprising a cutting edge, fixed to a roller which knife fixed to the roller form a knife fixing roller, and
- a motor configured to enable rotation of the cable specimen,
and either one or both of the following:
- at least two further rollers for holding the cable specimen together with the roller of the knife fixing roller, which rollers and the cutting edge being arranged in a roller plane, or
- at least one chuck of a lathe for holding the cable specimen.

The device according to the invention comprises two alternatives: In the first alternative, the device comprises at least three rollers, i.e. the roller comprising the knife and at least two further rollers. For holding the cable specimen, a minimum of three rollers are required. By the three rollers, the cable is hold in place. This is because, there are three points required to hold a two-dimensional object tight in place. The term "roller" is to be understood in a broad sense: Any gadget enabling an easy sliding of the cable when rotating is assumed to be a roller. The at least two further rollers may e.g. be a ball bearing. In that case, the balls of the ball bearing represent the at least three rollers. The rollers are arranged such that notional lines between each of the at least three rollers form a triangle being a notional plane. This notional plane is designated the roller plane. The cable specimen is essentially perpendicular to this plane.

In the second alternative, the cable specimen is held by at least one chuck, preferably two chucks of a lathe. This alternative represents a simple way of constructing the device for peeling a cable specimen. The device is particularly beneficial for cable specimen not too long. The preferred method enables a tight fastening of the cable specimen.

According to a preferred aspect, the device is a lathe comprising a knife, comprising a cutting edge, fixed to a roller which knife fixed to the roller form a knife fixing roller, and a motor configured to enable rotation of the cable specimen, and either one or both of the following: at least two further rollers for holding the cable specimen together with the roller of the knife fixing roller, which rollers and the cutting edge being arranged in a roller plane, or at least one chuck of a lathe for holding the cable specimen.

This preferred device enables an implementation of the device comprising the knife fixed to a roller.

In one aspect, the device further comprises a collector roll for spooling a cable peeling sample, wherein the motor is configured to enable rotating of the cable specimen and rotating of the collector roll.

The preferred device comprises one drive unit impelling the cable specimen to rotate and further impelling the collector roll to rotate at the same time.

In one aspect, the device further comprises a torque limiter arranged to the collector roll, which torque limiter enables exerting a constant pulling force to the cable peeling sample during spooling of the cable peeling sample onto the collector roll.

The device enables a uniform spooling of the cable specimen onto the collector roll: The obtained peeling sample is assembled on a collector roll. The constant pulling force exerted by the collector roll ensures that the peeling sample is not over-stretched, but tight wrapped on the collector roll. In fact, it is slightly stretched so it is neatly and stably removed such that it comes away from the knife. This yields a more stable cutting process having an influence on an improved uniform thickness.

In one aspect, the device further comprises, for exerting a force to the knife fixing roller, at least one or more of the following: a spring, a physical load-based mechanism, a hydraulic load cylinder, a pneumatic load cylinder, or a compressed elastic material.

Principally, the way of how to drive the knife towards the center of the cable specimen is not crucial. The above examples represent alternatives which are easily accessible.

In one aspect, the cutting edge of the knife has a width of 10 to 100 mm.

One important benefit of the device relates to the width of the peeling sample. The device enables obtaining a peeling sample in a broad range of a width, wherein at the same time, the thickness of the peeling sample is still quite uniform.

The invention's underlying problems are further solved by the subject-matter of claim 15. The present invention relates to a use of a device according to the invention for peeling a cable specimen, preferably for an automated peeling the cable specimen.

Features being solely disclosed in connection with the method of the invention are deemed to be disclosed in connection with the device of the invention and vice versa. Further, features being solely disclosed in connection with the method of the invention are deemed to be disclosed in connection with the use of the invention and vice versa.

Disclosed herewith is an alternative device for peeling a cable specimen. In particular, disclosed herewith is a device for peeling a cable specimen, wherein the device comprises at least three rollers for holding the cable specimen which rollers being arranged in a roller plane, a drive unit with a motor for causing rotation of the cable specimen, a drift unit comprising a knife, which drift unit enables moving a knife along a path towards the rotation axis of the cable specimen, which path is outside the roller plane, wherein a device unit enables communication between the drive unit and the drift unit.

The device enables performing an alternative method. A core issue refers to the movement of the knife. In that case the knife is not fixed to any one of the rollers. The rollers do not approach the center of the cable while the peeling proceeds.

In one aspect, the roller plane and the knife are arranged in a distance between 2 and 20 cm. It is favorable to arrange the knife as close as possible to the roller plan without cutting the surface of the cable specimen where the rollers move on the surface of the roller plane.

In one aspect, the device comprises six rollers, wherein three rollers are arranged in a first roller plane and further three rollers are arranged in a second roller plane, wherein the drift unit is arranged between the first roller plane and the second roller plane.

The preferred method enables a tight fasting of the cable specimen by use of at least six rollers arranged as two times three rollers. There can be even more than six rollers. This is particularly the case if the rollers are placed on bogies.

In one aspect, the device further comprises one or two lathe chucks for clamping the cable specimen. The preferred method enables a tight fastening of the cable specimen.

### BRIEF DESCRIPTION OF THE DRAWINGS

Certain aspects of the presently disclosed subject-matter will be described with reference to the accompanying drawings, which are representative and schematic in nature and are not be considered to be limiting in any respect as it relates to the scope of the subject-matter disclosed herein:
Figure 1 depicts a schematic device for preparing a peeling sample, which device represents an alternative of the peeling device according to the invention.
Figure 2 depicts knife fixing roller being part of the peeling device of the invention.
Figure 3 depicts a knife fixing roller placed on a cable specimen.

### DESCRIPTION OF EMBODIMENTS

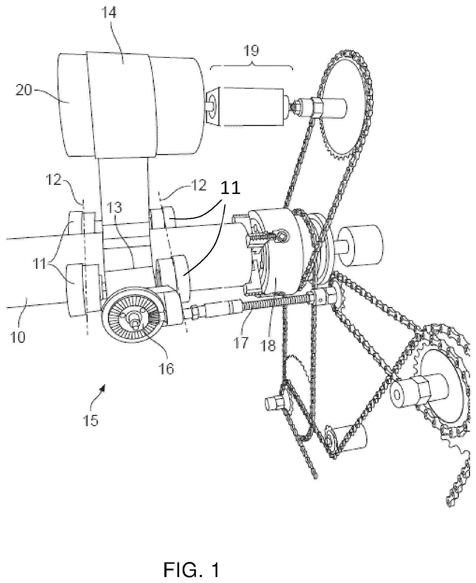

Figure 1 shows a device for peeling a cable specimen 10, which device is an alternative device to the device of the invention. The rollers 11 arranged in a roller plane 12 hold the cable specimen 10. Fig. 1 shows a device in which six rollers 11 are implemented, wherein two rollers are hidden by the cable specimen 10. Accordingly, the device shows two roller planes 12. Two lathe chucks 18 (only one of which is shown in Fig. 1) hold the cable specimen 10. A drive unit 21 induces the rotation of the cable specimen 10 and also a force transmission device 17. The drift unit 15 receives an impact via a worm gear 16 from the force transmission device 17 such that the knife 13 cuts the cable specimen 10 and the peeling sample 14 is obtained. The drive unit 21 also impels a shaft causing a collector roll 20 to rotate. The torque limiter 19 causes that the collector roll 20 pulls with a constant force on the obtained peeling sample 14.

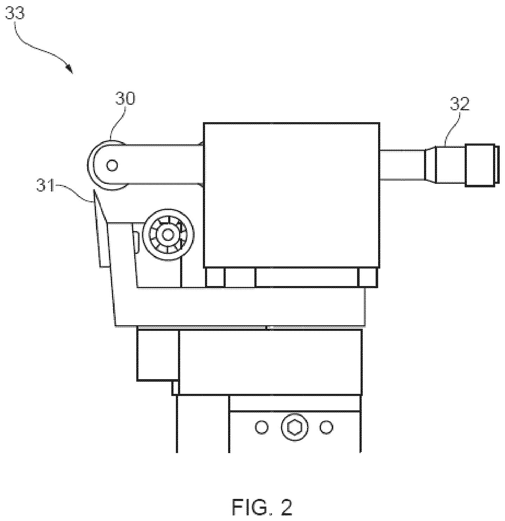

Figure 2 shows a knife fixing roller 33 which is to be arranged on a cable specimen such that roller 30 and knife 31 touches the cable specimen. The means for setting the distance 32 is adjusted as needed. A rotation of the cable specimen results in performing the peeling of the cable specimen.

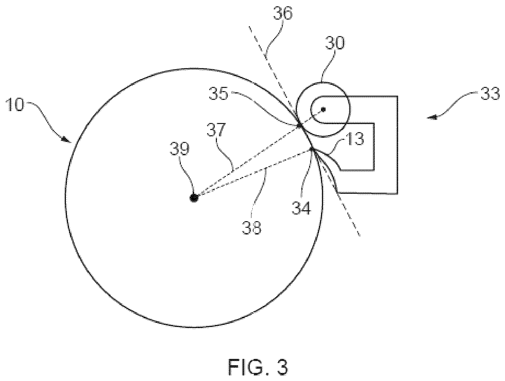

Figure 3 shows a knife fixing roller 33 on the cable specimen 10. The knife 13 touches the surface of the cable specimen 10 at the contact point 34. The roller 30 touches the surface of the cable specimen 10 at the contact point 35. These two contact points 34 and 35 form a notional straight line 36. The rotation axis 39 of the cable specimen, the contact point 35 and the rotation axis of the roller 30 are positioned on a second notional line 37, and the rotational axis 39 of the cable specimen 10 and the contact point 34 are positioned on a third notional line 38. When the cable specimen 10 is caused to rotate, the peeling is conducted which again causes that the knife fixing roller 33 moves into the direction of the rotation axis 39 cable specimen 10. The line of movement of the knife represents the trajectory (not shown).

### REFERENCE LIST

- 10: Cable specimen
- 11: Rollers
- 12: Roller plane
- 13: Knife
- 14: Peeling sample
- 15: Drift unit
- 16: Worm gear
- 17: Force transmission device
- 18: Lathe chuck
- 19: Torque limiter
- 20: Collector roll
- 21: Drive unit
- 30: Roller
- 31: Knife of the knife fixing roller
- 32: Means for setting the distance between roller and knife
- 33: Knife fixing roller
- 34: Contact point of the knife
- 35: Contact point of the roller
- 36: Notional straight line
- 37: Second notional line
- 38: Third notional line
- 39: Rotational axis of the cable specimen

## Claims

1. A method of peeling a cable specimen (10), which method comprises
• fixing a knife (31), comprising a cutting edge, to a roller (30) to receive a knife fixing roller (33),
• setting the distance between a rotation axis of the roller (30) and the cutting edge of the knife (31) to a fixed distance,
• holding the cable specimen (10),
• positioning the knife fixing roller (33) onto the cable specimen (10) such that the roller (30) and the cutting edge of the knife (31) are in contact with the cable specimen (10),
• rotating the cable specimen (10), while the knife fixing roller (33) moves in the direction of the center of the cable specimen (10), and receiving a cable peeling sample (14).

2. Method according to claim 1, wherein the step of holding the cable specimen (10) is performed by at least three rollers (30) being arranged in a roller plane, wherein one of the rollers (30) is the roller of the knife fixing roller (33); and/or wherein the step of holding the cable specimen (10) is performed by a chuck (18), preferably two chucks (18), of a lathe.

3. Method according to claim 1 or claim 2, wherein the method comprises applying a force to the knife fixing roller (33) which force has a force component directed to the center of the cable specimen (10).

4. Method according to claim 3, wherein the force is exerted by a spring, a physical load-based mechanism, a hydraulic load cylinder, a pneumatic load cylinder, or a compressed elastic material.

5. Method according to any one of claims 1 to 4, wherein the method further comprises the steps of
• receiving a cable peeling sample (14) and
• spooling the cable peeling sample (14) onto a collector roll (20), wherein preferably the collector roll (20) exerts a constant pulling force to the cable peeling sample (14) when spooling the cable peeling sample (14) onto the collector roll (20).

6. Method according to any one of claims 1 to 5, wherein the step of performing rotating the cable specimen (10) is performed by a drive unit (21) and wherein the step of spooling is performed by force transmission from the drive unit (21) to the collector roll (20).

7. Method according to claim 6, wherein the step of spooling is performed by force transmission from the drive unit (21) to the collector roll (20) applying a torque limiter (19) coupling.

8. Method according to any one of claims 1 to 7, wherein the method further comprises the step of stopping the method before the knife (13) comes into contact with the cable conductor of the cable specimen (10).

9. Method according to any one of claims 1 to 8, wherein the method further comprises the steps of
• providing a marking on the cable specimen (10),
• detecting the marking on the cable peeling sample (14) and thereby allocating a position of the cable peeling sample (14) to the corresponding spatial position in the cable specimen (10).

10. Device for peeling a cable specimen (10), wherein the device comprises
• a knife (31), comprising a cutting edge, fixed to a roller (30) which knife (31) fixed to the roller (30) forms a knife fixing roller (33), and
• a motor configured to enable rotation of the cable specimen (10),
and at least one of the following:
• at least two further rollers for holding the cable specimen (10) together with the roller (30) of the knife fixing roller (33), which rollers (30) and the cutting edge being arranged in a roller plane, or
• at least one chuck (18) of a lathe for holding the cable specimen (10).

11. Device of claim 10, wherein the device further comprises a collector roll (20) for spooling a cable peeling sample (14), wherein the motor is configured to enable rotating the cable specimen (10) and rotating the collector roll (20).

12. Device of claim 10 or claim 11, wherein the device further comprises a torque limiter (19) arranged to the collector roll (20), which torque limiter (19) enables exerting a constant pulling force to the cable peeling sample (14) during spooling of the cable peeling sample (14) onto the collector roll (20).

13. Device according to any one of claims 10 to 12, wherein the device further comprises, for exerting a force to the knife fixing roller (33), at least one or more of the following: a spring, a physical load-based mechanism, a hydraulic load cylinder, a pneumatic load cylinder, or a compressed elastic material.

14. Device according to any one of claims 10 to 13, wherein the cutting edge of the knife (31) has a width of 10 to 100 mm.

15. Use of a device according to any one of claims 10 to 14 for peeling a cable specimen (10), preferably for an automated peeling the cable specimen (10).

## Patentansprüche

1. Verfahren zum Schälen einer Kabelprobe (10), wobei das Verfahren umfasst:
Befestigen eines Messers (31), das eine Schneidkante umfasst, an einer Walze (30), um eine Messerbefestigungswalze (33) zu erhalten,
Einstellen des Abstands zwischen einer Rotationsachse der Walze (30) und der Schneidkante des Messers (31) auf einen festen Abstand,
Halten der Kabelprobe (10),
Positionieren der Messerbefestigungswalze (33) auf der Kabelprobe (10), so dass die Walze (30) und die Schneidkante des Messers (31) in Kontakt mit der Kabelprobe (10) sind,
Drehen der Kabelprobe (10), während sich die Messerbefestigungswalze (33) in Richtung der Mitte der Kabelprobe (10) bewegt, und Erhalten einer Kabelschälprobe (14).

2. Verfahren nach Anspruch 1, wobei der Schritt des Haltens der Kabelprobe (10) durch mindestens drei Walzen (30) durchgeführt wird, die in einer Walzenebene angeordnet sind, wobei eine der Walzen (30) die Walze der Messerbefestigungswalze (33) ist; und/oder wobei der Schritt des Haltens der Kabelprobe (10) durch ein Spannfutter (18), vorzugsweise zwei Spannfutter (18), einer Drehmaschine durchgeführt wird.

3. Verfahren nach Anspruch 1 oder Anspruch 2, wobei das Verfahren das Aufbringen einer Kraft auf die Messerbefestigungswalze (33) umfasst, wobei die Kraft eine Kraftkomponente aufweist, die zur Mitte der Kabelprobe (10) gerichtet ist.

4. Verfahren nach Anspruch 3, wobei die Kraft durch eine Feder, einen auf physikalischer Last basierenden Mechanismus, einen hydraulischen Lastzylinder, einen pneumatischen Lastzylinder oder ein komprimiertes elastisches Material ausgeübt wird.

5. Verfahren nach einem der Ansprüche 1 bis 4, wobei das Verfahren ferner die Schritte umfasst:
Erhalten einer Kabelschälprobe (14) und
Aufspulen der Kabelschälprobe (14) auf eine Sammelrolle (20), wobei vorzugsweise die Sammelrolle (20) eine konstante Zugkraft auf die Kabelschälprobe (14) ausübt, wenn die Kabelschälprobe (14) auf die Sammelrolle (20) aufgespult wird.

6. Verfahren nach einem der Ansprüche 1 bis 5, wobei der Schritt des Durchführens des Drehens der Kabelprobe (10) durch eine Antriebseinheit (21) durchgeführt wird und wobei der Schritt des Aufspulens durch Kraftübertragung von der Antriebseinheit (21) auf die Sammelrolle (20) durchgeführt wird.

7. Verfahren nach Anspruch 6, wobei der Schritt des Aufspulens durch Kraftübertragung von der Antriebseinheit (21) auf die Sammelrolle (20) unter Anwendung einer Kupplung durch Drehmomentbegrenzer (19) durchgeführt wird.

8. Verfahren nach einem der Ansprüche 1 bis 7, wobei das Verfahren ferner den Schritt des Stoppens des Verfahrens umfasst, bevor das Messer (13) in Kontakt mit dem Kabelleiter der Kabelprobe (10) kommt.

9. Verfahren nach einem der Ansprüche 1 bis 8, wobei das Verfahren ferner die Schritte umfasst:
Anbringen einer Markierung auf der Kabelprobe (10),
Erkennen der Markierung auf der Kabelschälprobe (14) und dadurch Zuordnen einer Position der Kabelschälprobe (14) zu der entsprechenden räumlichen Position in der Kabelprobe (10).

10. Vorrichtung zum Schälen einer Kabelprobe (10), wobei die Vorrichtung umfasst:
ein Messer (31), das eine Schneidkante umfasst, befestigt an einer Walze (30), wobei das an der Walze (30) befestigte Messer (31) eine Messerbefestigungswalze (33) bildet, und
einen Motor, der konfiguriert ist, um die Drehung der Kabelprobe (10) zu ermöglichen,
und mindestens eines der folgenden:
mindestens zwei weitere Walzen zum Halten der Kabelprobe (10) zusammen mit der Walze (30) der Messerbefestigungswalze (33), wobei die Walzen (30) und die Schneidkante in einer Walzenebene angeordnet sind, oder
mindestens ein Spannfutter (18) einer Drehmaschine zum Halten der Kabelprobe (10).

11. Vorrichtung nach Anspruch 10, wobei die Vorrichtung ferner eine Sammelrolle (20) zum Aufspulen einer Kabelschälprobe (14) umfasst, wobei der Motor konfiguriert ist, um das Drehen der Kabelprobe (10) und das Drehen der Sammelrolle (20) zu ermöglichen.

12. Vorrichtung nach Anspruch 10 oder Anspruch 11, wobei die Vorrichtung ferner einen Drehmomentbegrenzer (19) umfasst, der an der Sammelrolle (20) angeordnet ist, wobei der Drehmomentbegrenzer (19) das Ausüben einer konstanten Zugkraft auf die Kabelschälprobe (14) während des Aufspulens der Kabelschälprobe (14) auf die Sammelrolle (20) ermöglicht.

13. Vorrichtung nach einem der Ansprüche 10 bis 12, wobei die Vorrichtung ferner zum Ausüben einer Kraft auf die Messerbefestigungswalze (33) mindestens eines oder mehrere der folgenden umfasst: eine Feder, einen auf physikalischer Last basierenden Mechanismus, einen hydraulischen Lastzylinder, einen pneumatischen Lastzylinder oder ein komprimiertes elastisches Material.

14. Vorrichtung nach einem der Ansprüche 10 bis 13, wobei die Schneidkante des Messers (31) eine Breite von 10 bis 100 mm aufweist.

15. Verwendung einer Vorrichtung nach einem der Ansprüche 10 bis 14 zum Schälen einer Kabelprobe (10), vorzugsweise für ein automatisiertes Schälen der Kabelprobe (10).

## Revendications

1. Procédé de pelage d'un spécimen de câble (10), lequel procédé comprend
• fixer un couteau (31), comprenant un bord tranchant, à un rouleau (30) pour recevoir un rouleau de fixation de couteau (33),
• régler la distance entre un axe de rotation du rouleau (30) et le bord tranchant du couteau (31) à une distance fixe,
• maintenir le spécimen de câble (10),
• positionner le rouleau de fixation de couteau (33) sur le spécimen de câble (10) de sorte que le rouleau (30) et le bord tranchant du couteau (31) soient en contact avec le spécimen de câble (10),
• faire tourner le spécimen de câble (10), tandis que le rouleau de fixation de couteau (33) se déplace en direction du centre du spécimen de câble (10), et reçoit un échantillon de pelage de câble (14).

2. Procédé selon la revendication 1, dans lequel l'étape de maintien du spécimen de câble (10) est effectuée par au moins trois rouleaux (30) disposés dans un plan de rouleaux, dans lequel l'un des rouleaux (30) est le rouleau du rouleau de fixation de couteau (33); et/ou dans lequel l'étape de maintien du spécimen de câble (10) est effectuée par un mandrin (18), de préférence deux mandrins (18), d'un tour.

3. Procédé selon la revendication 1 ou la revendication 2, dans lequel le procédé comprend l'application d'une force au rouleau de fixation de couteau (33), laquelle force a une composante de force dirigée vers le centre du spécimen de câble (10).

4. Procédé selon la revendication 3, dans lequel la force est exercée par un ressort, un mécanisme basé sur une charge physique, un vérin de charge hydraulique, un vérin de charge pneumatique, ou un matériau élastique comprimé.

5. Procédé selon l'une quelconque des revendications 1 à 4, dans lequel le procédé comprend en outre les étapes de
• recevoir un échantillon de pelage de câble (14) et
• enrouler l'échantillon de pelage de câble (14) sur un rouleau collecteur (20), dans lequel de préférence le rouleau collecteur (20) exerce une force de traction constante sur l'échantillon de pelage de câble (14) lors de l'enroulement de l'échantillon de pelage de câble (14) sur le rouleau collecteur (20).

6. Procédé selon l'une quelconque des revendications 1 à 5, dans lequel l'étape de faire tourner le spécimen de câble (10) est effectuée par une unité d'entraînement (21) et dans lequel l'étape d'enroulement est effectuée par transmission de force depuis l'unité d'entraînement (21) vers le rouleau collecteur (20).

7. Procédé selon la revendication 6, dans lequel l'étape d'enroulement est effectuée par transmission de force depuis l'unité d'entraînement (21) vers le rouleau collecteur (20) en appliquant un accouplement limiteur de couple (19).

8. Procédé selon l'une quelconque des revendications 1 à 7, dans lequel le procédé comprend en outre l'étape d'arrêt du procédé avant que le couteau (13) n'entre en contact avec le conducteur de câble du spécimen de câble (10).

9. Procédé selon l'une quelconque des revendications 1 à 8, dans lequel le procédé comprend en outre les étapes de
• fournir un marquage sur le spécimen de câble (10),
• détecter le marquage sur l'échantillon de pelage de câble (14) et ainsi attriburt une position de l'échantillon de pelage de câble (14) à la position spatiale correspondante dans le spécimen de câble (10).

10. Dispositif pour peler un spécimen de câble (10), dans lequel le dispositif comprend
• un couteau (31), comprenant un bord tranchant, fixé à un rouleau (30), lequel couteau (31) fixé au rouleau (30) forme un rouleau de fixation de couteau (33), et
• un moteur configuré pour permettre la rotation du spécimen de câble (10), et
au moins l'un des éléments suivants:
• au moins deux rouleaux supplémentaires pour maintenir le spécimen de câble (10) conjointement avec le rouleau (30) du rouleau de fixation de couteau (33), lesquels rouleaux (30) et le bord tranchant étant disposés dans un plan de rouleaux, ou
• au moins un mandrin (18) d'un tour pour maintenir le spécimen de câble (10).

11. Dispositif selon la revendication 10, dans lequel le dispositif comprend en outre un rouleau collecteur (20) pour enrouler un échantillon de pelage de câble (14), dans lequel le moteur est configuré pour permettre la rotation du spécimen de câble (10) et la rotation du rouleau collecteur (20).

12. Dispositif selon la revendication 10 ou la revendication 11, dans lequel le dispositif comprend en outre un limiteur de couple (19) disposé sur le rouleau collecteur (20), lequel limiteur de couple (19) permet d'exercer une force de traction constante sur l'échantillon de pelage de câble (14) pendant l'enroulement de l'échantillon de pelage de câble (14) sur le rouleau collecteur (20).

13. Dispositif selon l'une quelconque des revendications 10 à 12, dans lequel le dispositif comprend en outre, pour exercer une force sur le rouleau de fixation de couteau (33), au moins un ou plusieurs des éléments suivants: un ressort, un mécanisme basé sur une charge physique, un vérin de charge hydraulique, un vérin de charge pneumatique, ou un matériau élastique comprimé.

14. Dispositif selon l'une quelconque des revendications 10 à 13, dans lequel le bord tranchant du couteau (31) a une largeur de 10 à 100 mm.

15. Utilisation d'un dispositif selon l'une quelconque des revendications 10 à 14 pour peler un spécimen de câble (10), de préférence pour un pelage automatisé du spécimen de câble (10).
